# EUROPÄISCHE PATENTSCHRIFT

(11) **EP 3 066 036 B1**
(45) Veröffentlichungstag und Bekanntmachung des Hinweises auf die Patenterteilung: **01.11.2017**
(21) Anmeldenummer: 14766718.2
(22) Anmeldetag: 16.09.2014
(51) Int. Cl.: B65G 47/91, B25B 11/00, B25J 15/06

(54) **VENTIL FÜR UNTERDRUCKHANDHABUNGS- ODER SPANNEINRICHTUNG, SOWIE UNTERDRUCKHANDHABUNGSEINRICHTUNG**
VALVE FOR A VACUUM HANDLING OR CLAMPING DEVICE, AND VACUUM HANDLING DEVICE
CLAPET POUR DISPOSITIF DE MANIPULATION PAR DÉPRESSION OU DE SERRAGE PAR DÉPRESSION, AINSI QUE MOYEN DE MANIPULATION PAR DÉPRESSION

(30) Priorität: 04.11.2013 DE 102013222376
(43) Veröffentlichungstag der Anmeldung: 14.09.2016
(73) Patentinhaber: J. Schmalz GmbH, 72293 Glatten (DE)
(72) Erfinder: EISELE, Thomas, 72275 Alpirsbach-Peterzell (DE); HOEHN, Rainer, 72280 Dornstetten (DE)
(74) Vertreter: DREISS Patentanwälte PartG mbB
(86) Internationale Anmeldenummer: PCT/EP2014/069736
(87) Internationale Veröffentlichungsnummer: WO 2015/062779

(56) Entgegenhaltungen:
- DE-A1- 3 906 634
- DE-C2- 19 814 262
- US-B1- 6 173 738

## Beschreibung

Die Erfindung betrifft ein Ventil für Unterdruckhandhabungseinrichtungen oder Unterdruckspanneinrichtungen gemäß dem Oberbegriff des Anspruchs 1. Hierbei handelt es sich um Ventile, die bei unbelegter Saugstelle selbsttätig schließen und so eine unerwünschte Leckage von der Ansaugseite des Ventils zu der Unterdruckversorgungsseite verhindern.

Zur Vermeidung einer unerwünschten Leckage im unbelegten Zustand der Saugstelle sind verschiedene Lösungen bekannt. Beispielsweise zeigt die DE 34 29 444 A1 ein Strömungsventil, bei welchem ein als Kugel ausgebildeter Ventilkörper verlagerbar in einem Strömungskanal angeordnet ist. Wird durch die unbelegte Saugstelle frei angesaugt, so wird die Kugel in dem Strömungskanal aufgrund des großen Strömungsimpulses gegen einen Dichtsitz mitgerissen und verschließt den Strömungskanal. Aufgrund der Auslösung durch den Strömungsimpuls sind derartige Ventile störungsanfällig bei Strömungsstößen. Auch bei belegter Saugstelle kann bei Beginn eines Ansaugvorgangs aufgrund des anfänglichen Strömungsstoßes in unerwünschter Weise die Schließstellung eingenommen werden.

Darüber hinaus sind Ventile bekannt, bei welchen ein selbsttätiges Schließen in unbelegtem Zustand der Ansaugseite nicht aufgrund eines Strömungsimpulses erfolgt, sondern durch eine sich bei freiem Ansaugen einstellende, statische Druckdifferenz eingeleitet wird. Die DE 198 14 262 C2 zeigt ein Ventil mit den Merkmalen des Oberbegriffs des Anspruchs 1. Der von einem flexiblen Abschnitt des Ventilkörpers begrenzte Steuerraum steht ständig in Verbindung mit der Unterdruckversorgungsseite. Bei Kompression des Steuerraumes wird der flexible Abschnitt derart verformt, dass der Ventilkörper in seine Schließstellung gebracht wird. Gegenüber der Ansaugseite ist der Steuerraum strömungsmäßig vollständig abgeschlossen. Bei Ansaugen im unbelegten Zustand der Ansaugseite stellt sich auf der Ansaugseite kein Unterdruck ein. Dies führt dazu, dass der Steuerraum aufgrund der statischen Druckdifferenz zwischen Steuerraum und Ansaugseite komprimiert wird und der Ventilkörper in seine Schließstellung gebracht wird. Gegenüber den mittels Strömungsimpuls arbeitenden Ventilen bietet dies den Vorteil, dass Störungen durch Strömungsstöße vermieden werden können. Allerdings muss die Zeitskala zum selbsttätigen Schließen und die Empfindlichkeit auf Druckschwankungen an die jeweils mit dem Ventil angesteuerte Unterdruckhandhabungseinrichtung bzw. Unterdruckspanneinrichtung angepasst werden.

Ein Unterdruckventil ist in der DE 102 16 220 A1 beschrieben, wobei der Ventilkörper von einem scheibenartigen Element gebildet ist.

Vor diesem Hintergrund liegt der Erfindung die Aufgabe zugrunde, eine unerwünschte Leckage zwischen Unterdruckversorgungsseite und Ansaugseite im unbelegten Zustand der Ansaugseite zu vermeiden und dabei eine unerwünschte Empfindlichkeit gegen Strömungsstöße zu vermeiden, sowie eine Anpassung an die Eigenschaften der angesteuerten Unterdruckhandhabungseinrichtung oder Unterdruckspanneinrichtung zu ermöglichen.

Diese Aufgabe wird durch ein Ventil gemäß Anspruch 1, sowie durch eine Sauggreifvorrichtung gemäß Anspruch 11 gelöst. Ausgangspunkt sind selbsttätig schließende Ventile, bei welchen die Schließstellung nicht von einem Strömungsimpuls, sondern durch eine sich in unbelegtem Zustand der Ansaugseite einstellende, statische Druckdifferenz zwischen verschiedenen Bereichen des Ventils herbeigeführt wird. Das Ventil hat eine zumindest eine Ansaugöffnung aufweisende Ansaugseite und eine Unterdruckversorgungsseite mit einem Absauganschluss zum Anschluss an eine Unterdruckversorgungseinrichtung. Zwischen Unterdruckversorgungsseite und Ansaugseite ist ein Ventilgehäuse vorgesehen. In dem Ventilgehäuse ist eine flexible Trennwandung, beispielsweise Membran, vorgesehen, welche gegenüber der Ansaugseite einen Steuerraum abgrenzt. Der Steuerraum steht mit der Unterdruckversorgungsseite über einen Absaugdurchgang in Strömungsverbindung. An der flexiblen Trennwandung ist ein Ventilkörper angeordnet, welcher zwischen einer Öffnungslage und einer Schließlage bewegbar ist. Dieser Ventilkörper weist einen Dichtabschnitt auf, der zur Abdichtung der Unterdruckversorgungsseite gegenüber der Ansaugseite an einen zugeordneten Dichtsitz anlegbar ist. Der Dichtabschnitt ist insbesondere derart ausgebildet, dass in der Schließlage des Ventilkörpers der Steuerraum gegenüber der Unterdruckversorgungsseite abgedichtet wird. Konkret ist der Dichtabschnitt derart angeordnet, dass er in der Schließlage den Absaugdurchgang verschließt und in der Öffnungslage den Absaugdurchgang frei gibt. Das Ventil ist dabei derart ausgebildet, dass in Abhängigkeit einer Druckdifferenz zwischen Steuerraum und Ansaugseite, insbesondere eines sich in den Steuerraum gegenüber der Ansaugseite einstellenden Unterdrucks, das Volumen des Steuerraums unter Verformung der flexiblen Trennwandung verringert werden kann, wobei dabei der Ventilkörper von der Öffnungslage in die Schließlage bewegt wird. Dadurch wird bei freiem Ansaugen in unbelegtem Zustand der Ansaugseite der Ventilkörper aufgrund eines sich in dem Steuerraum einstellenden statischen Unterdrucks gegenüber der Ansaugseite in die Schließlage bewegt.

Der Ventilkörper weist einen Saugseitendurchgang auf, welcher bei Vorliegen der Öffnungslage die Ansaugseite mit dem von der Trennwandung abgegrenzten Steuerraum derart strömungsverbindet, dass Luft von der Ansaugseite in den Steuerraum einsaugbar ist. Eine weitere kompakte Ausgestaltung mit hoher Funktionssicherheit wird dadurch erreicht, dass der Ventilkörper die flexible Trennwandung durchdringt, wobei der Dichtabschnitt auf einer Seite liegt und ein Führungsabschnitt des Ventilkörpers auf der anderen Seite der Trennwandung liegt.

In der Öffnungslage des Ventilkolbens liegt in dem Steuerraum ständig der von der Unterdruckversorgung bereitgestellte Unterdruck an und wirkt auf eine Kompression des Steuerraumes hin. Durch den Saugseitendurchgang strömt von der Ansaugseite eingesaugte Luft in den Steuerraum nach, wobei diese Strömung durch den Saugseitendurchgang begrenzt ist. Ist die Ansaugseite unbelegt (freies Ansaugen), so führt die vergleichsweise große Strömung über den Strömungswiderstand zu einer Druckdifferenz und damit zu einem Unterdruck im Steuerraum gegenüber der Ansaugseite. Erreicht die Druckdifferenz einen vorbestimmten oder vorbestimmbaren Wert, so führt dies zur Kompression des Steuerraumes, welche mit der Bewegung des Ventilkolbens in seine Schließlage unter Verformung der Trennwandung verbunden ist. Dies führt dazu, dass der Dichtabschnitt an einem zugeordneten Dichtsitz im Ventilgehäuse derart anliegt, dass der Absaugdurchgang verschlossen ist. Aufgrund des in dem mit der Unterdruckversorgungsseite verbundenem Absaugdurchgang herrschenden Unterdrucks wird der Dichtabschnitt des Ventilkolbens in der Schließposition gehalten. Das Ventil bleibt geschlossen und der Ventilkörper in seiner Schließstellung festgesaugt.

Der Ventilkörper wird daher im unbelegten Zustand der Ansaugseite nicht unmittelbar durch den Strömungsimpuls in die Schließlage gebracht, sondern durch eine sich zwischen Steuerraum und Ansaugseite einstellende statische Druckdifferenz. Bei dem erfindungsgemäßen Ventil kann durch die Ausgestaltung der flexiblen Trennwandung, insbesondere durch deren Flexibilität, durch die Ausgestaltung des Saugseitendurchgangs und/oder des Absaugdurchgangs eine Anpassung an die strömungstechnischen Eigenschaften der Unterdruckversorgung bzw. der anzusteuernden Vorrichtung vorgenommen werden. Insbesondere kann die Ansprechempfindlichkeit des Ventils festgelegt werden.

Die Ansaugseite und die Unterdruckversorgungsseite können Anschlusselemente umfassen, beispielsweise auf der Ansaugseite ein Sauganschlusselement zur Verbindung mit einer Unterdruckhandhabungs- oder -Spanneinrichtung, z.B. eines Sauggreifers, und auf der Unterdruckversorgungsseite ein Versorgungsanschlusselement zum Anschluss an eine Unterdruckversorgungseinrichtung.

Um den Strömungswiderstand und damit den sich in Abhängigkeit der Saugströmung durch die Ansaugseite einstellenden Unterdruck zwischen Ansaugseite und Steuerraum einzustellen, weist der Saugseitendurchgang vorzugsweise eine Drosselstelle auf. Diese ist insbesondere derart einstellbar ausgebildet, dass der Strömungswiderstand vorgebbar und variierbar ist. Hierzu kann ein Drosselstellglied vorgesehen sein, welches zwischen einer Drossellage, die einem hohen Strömungswiderstand entspricht und einer Freigabelage, die einen im Vergleich niedrigen Strömungswiderstand entspricht, bewegbar ist. Dies kann beispielsweise durch eine in einem Drosselkanal einschraubbare Madenschraube realisiert werden. Die Einstellbarkeit des Strömungswiderstandes ermöglicht die Vorgabe der Ventilempfindlichkeit. Vorzugsweise ist der Strömungswiderstand der Drosselstelle größer als der Strömungswiderstand für eine Saugströmung von dem Steuerraum durch den Absaugdurchgang. Der Strömungsquerschnitt des Saugseitendurchgangs an der Drosselstelle ist vorzugsweise kleiner als der kleinste Strömungsquerschnitt des Absaugdurchgangs an seiner engsten Stelle.

Der Saugseitendurchgang kann kanalartig in dem Führungsabschnitt verlaufen und in Verbindungsöffnungen münden, welche zwischen der flexiblen Trennwandung und dem Dichtabschnitt an dem Ventilkörper vorgesehen sind und welche die Verbindung von Steuerraum mit dem Saugseitendurchgang und der Ansaugseite herstellen. In dem kanalartigen Abschnitt des Ventilkolbens kann in vorteilhafter Weise die Drosselstelle angeordnet sein.

Der Dichtabschnitt begrenzt vorzugsweise eine konische oder saugglockenartige Vertiefung, insbesondere mit einer die Vertiefung umlaufenden Dichtlippe. Die Vertiefung ist dem Absaugzugang zugewandt. In der Schließlage definiert die Vertiefung einen mit der Unterdruckversorgungsseite verbundenen, aber gegenüber dem Steuerraum abgedichteten Festsaugraum. In Schließlage wird der Festsaugraum evakuiert und der Ventilkolben in seiner Schließlage festgesaugt. Insbesondere ist die Vertiefung von verformbaren Wandungen des Dichtabschnitts derart begrenzt, dass beim Festsaugen in der Schließlage der Festsaugraum komprimiert und plattgedrückt wird und der Dichtabschnitt an einem Dichtsitz anliegt.

Die flexible Trennwandung ist vorzugsweise entlang eines umlaufenden Randes in dem Ventilgehäuse befestigt. Insbesondere ist das Ventilgehäuse mehrteilig ausgebildet und die Trennwandung zu ihrer Befestigung zwischen den zusammensetzbaren Teilen des Ventilgehäuses entlang ihres Randes eingeklemmt. Die Trennwandung dient insbesondere als Tragemembran für den Ventilkörper. Der Ventilkörper ist an der flexiblen Trennwandung vorzugsweise von dem umlaufenden Rand beabstandet, insbesondere mittig, in der flexiblen Trennwandung gehaltert.

Durch die Spannung und/oder die Elastizität der Trennwandung kann eine Vorspannkraft für den Ventilkörper in seiner Öffnungslage gegen eine Bewegung in die Schließlage vorgegeben werden. Dadurch kann die Ansprechempfindlichkeit des selbstschließenden Ventils eingestellt werden, insbesondere eine Druckdifferenz, ab welcher der Ventilkörper seine Schließlage einnimmt. Denkbar ist auch, dass eine Einstelleinrichtung vorgesehen ist, mit welcher die Spannung der flexiblen Trennwand einstellbar ist. Denkbar ist auch die Verwendung von elektroaktiven Polymeren für die flexible Trennwandung oder das Einbringen von elektrorheologischen Flüssigkeiten in Kammern innerhalb der flexiblen Trennwandung, so dass die Steifigkeit und Flexibilität der flexiblen Trennwandung durch Anlegen einer elektrischen Spannung einstellbar ist.

Die flexible Trennwandung verläuft vorzugsweise derart, dass auf der dem Steuerraum abgewandten Seite der flexiblen Trennwandung ein Saugseitenraum gebildet ist. Dieser ist insbesondere mit einer Ansaugöffnung der Ansaugseite druckverbunden bzw. mündet in einer solchen Ansaugöffnung. Dadurch ist der Saugseitenraum mit dem auf der Ansaugseite herrschenden Druck beaufschlagt. Die flexible Trennwandung ist also einerseits mit dem sich in dem Steuerraum einstellenden Unterdruck, andererseits mit dem Druck der Ansaugseite beaufschlagt. Die Deformation der Trennwand erfolgt daher in Abhängigkeit der sich bei Strömung von Ansaugseite in den Steuerraum einstellenden statischen Druckdifferenz auf den beiden Seiten der Trennwandung.

Der Ventilkörper kann einstückig mit der flexiblen Trennwandung ausgebildet sein. Das Ventilgehäuse ist insbesondere mehrteilig mit einem Basisteil und einem Verschlussteil ausgebildet. Das Basisteil wird mit dem Verschlussteil verbunden und dabei vorzugsweise die flexible Trennwandung zwischen Basisteil und Verschlussteil eingeklemmt. Insbesondere erstreckt sich der Steuerraum dann in den Basisteil. Durch diese Ausgestaltungen wird die Herstellung und die Montage des Ventils vereinfacht.

Zur weiteren Ausgestaltung kann der Absaugdurchgang eine Absaugdrosselstelle aufweisen, welche einen Strömungswiderstand für die Saugströmung von dem Steuerraum durch den Absaugdurchgang zur Unterdruckversorgungsseite definiert. Auch die Absaugdrosselstelle kann derart ausgebildet sein, dass der Strömungswiderstand einstellbar ist, wie vorstehend im Zusammenhang mit dem Saugseitendurchgang erläutert.

Die eingangs gestellte Aufgabe wird auch mit einer Sauggreifvorrichtung gemäß Anspruch 11 gelöst, welche einen Saugkörper mit einem Saugraum zur Anlage an ein zu greifendes Werkstück aufweist, wobei der Saugraum mit der Ansaugseite eines Ventils der vorstehend beschriebenen Art verbunden ist. Hierbei ist der Saugkörper vorzugsweise mit der flexiblen Trennwandung und/oder mit dem Ventilkörper verbunden, so dass bei Bewegung des Ventilkörpers von der Öffnungslage in die Schließlage der Saugkörper aus einer vorgeschobenen Sauglage in eine zurückgezogene Passivlage bewegt wird. Insbesondere ist der Saugkörper mit dem vorstehend beschriebenen Führungsabschnitt des Ventilkörpers verbunden, der auf der dem Saugraum abgewandten Seite der flexiblen Trennwandung liegt.

Die Sauggreifvorrichtung weist vorzugsweise ein Vorrichtungsgehäuse auf, welches das Ventilgehäuse umfasst bzw. dieses bildet. Der Saugkörper kann derart in dem Vorrichtungsgehäuse angeordnet sein, dass er in seiner vorgeschobenen Sauglage über das Ventilgehäuse hervorragt und an ein Werkstück anlegbar ist. Schaltet das Ventil in die Schließlage, so wird der Saugkörper in seine Passivstellung zurückgezogen. Dies ist insbesondere dann vorteilhaft, wenn die Sauggreifvorrichtung mehrere, nebeneinander angeordnete Saugkörper umfasst, wie dies beispielsweise bei Flächensauggreifer der Fall ist. Dadurch kann verhindert werden, dass solche Saugkörper, die an Rändern des zu greifenden Werkstückes nicht vollständig dichtend anliegen und daher eine Leckage durch die jeweilige Ansaugseite verbleibt, das gegriffene Werkstück entgegen der Saugwirkung der übrigen Saugkörper von der Sauggreifvorrichtung wegdrücken. Bei der beschriebenen Ausgestaltung werden solche unbelegten Sauger mit der Bewegung des Ventilkörpers in seine Schließlage eingezogen.

Weitere Einzelheiten und Ausgestaltungen der Erfindung werden im Folgenden unter Bezugnahme auf die Figur näher beschrieben und erläutert.

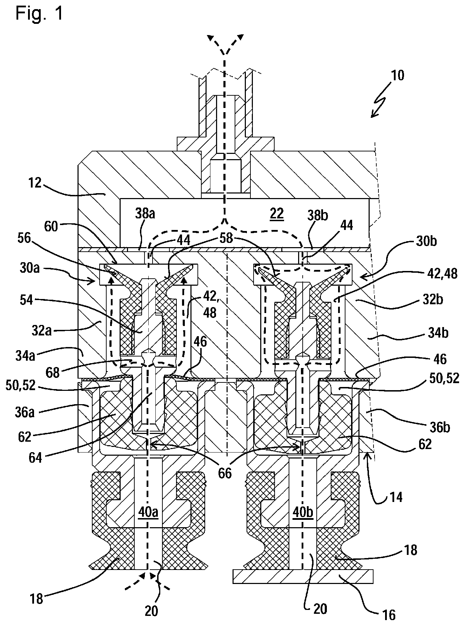

Die Figur 1 zeigt einen Ausschnitt einer Sauggreifvorrichtung 10 in Schnittdarstellung. Die Sauggreifvorrichtung 10 hat ein Vorrichtungsgehäuse 12 mit einer Anlagefläche 14, welche bei Verwendung der Sauggreifvorrichtung 10 einem zu greifenden Werkstück 16 zugewandt ist. Mehrere Saugkörper 18 sind nebeneinander an der Anlagefläche 14 angeordnet. Jeder Saugkörper 18 begrenzt einen in Ansaugrichtung offenen Saugraum 20, der zum Ansaugen eines Werkstücks 16 dichtend an diesem anliegt.

Je einem Saugkörper 18 zugeordnet ist ein Ventil zur Steuerung der Unterdruckversorgung des jeweiligen Saugraums 20 vorgesehen. In der Darstellung der Figur 1 sind zwei nebeneinander angeordnete Ventile 30a, 30b zu erkennen. Die Ventile 30a, 30b sind in dem Vorrichtungsgehäuse 12 aufgenommen. Insofern bildet je ein Abschnitt des Vorrichtungsgehäuses 12 je ein zugeordnetes Ventilgehäuse 32a, 32b für je ein Ventil 30a, 30b (der Buchstabenzusatz zu den Bezugszeichnen kennzeichnet jeweils die Zugehörigkeit zum Ventil 30a oder 30b).

Das Vorrichtungsgehäuse 12 ist mehrteilig aufgebaut, so dass auch die Ventilgehäuse 32a, 32b mehrteilig aufgebaut sind. Jedes Ventilgehäuse 32a, 32b umfasst daher ein von einem ersten Vorrichtungsgehäuseteil gebildetes Basisteil 34a (bzw. 34b) und ein damit verbundenes Verschlussteil 36a, 36b, das jeweils von einem unten liegenden, zweiten Vorrichtungsgehäuseteil gebildet ist.

In einem oberen Abschnitt des Vorrichtungsgehäuses 12 verläuft ein Unterdruckversorgungskanal 22, welcher mit einer nicht dargestellten Unterdruckversorgungseinrichtung kommuniziert, mittels welcher Luft oder ein sonstiges Fluid aus dem Unterdruckversorgungskanal 22 evakuiert werden kann. Der Unterdruckversorgungskanal 22 versorgt jeweils eine einen Absauganschluss einer Unterdruckversorgungsseite 38a, 38b der Ventile 30a, 30b.

Der das jeweilige Ventilgehäuse 32a, 32b bildende Abschnitt des Vorrichtungsgehäuses 12 erstreckt sich zwischen der jeweiligen Unterdruckversorgungsseite 38a, 38b und einer eine Ansaugöffnung aufweisende Ansaugseite 40a, 40b des Ventils 30a, 30b. Die Ansaugseite 40a, 40b kommuniziert mit dem jeweiligen Saugraum 20. Insofern erstreckt sich das Ventilgehäuse 32a, 32b zwischen der Ansaugseite 40a, 40b und der Unterdruckversorgungsseite 38a, 38b. Selbstverständlich ist auch denkbar, dass jedes Ventil 30a, 30b ein separat ausgebildetes Ventilgehäuse 32 aufweist, welches über eine Unterdruckversorgungsseite beispielsweise mit einem Unterdruckversorgungskanal und einer Unterdruckversorgungseinrichtung in Verbindung steht, und welches über eine Ansaugseite mit dem Saugraum einer Sauggreifvorrichtung verbindbar ist.

In dem Basisteil 34a, 34b des Ventilgehäuses 32a, 32b ist eine z.B. zylindrische Ventilgehäuseausnehmung 42 eingebracht, welche sich in Richtung von der Anlagefläche 14 weg zu dem Unterdruckversorgungskanal 22 hin erstreckt. Die Ventilgehäuseausnehmung 42 ist über einen Absaugdurchgang 44 mit der Unterdruckversorgungsseite 38a, 38b strömungsverbunden. In dem Absaugdurchgang 44 kann eine nicht näher dargestellte Drosselstelle zur Vorgabe eines Strömungswiderstandes vorgesehen sein.

Zwischen dem unten liegenden Verschlussteil 36a, 36b und dem oben liegenden Basisteil 34a, 34b ist eine als flexible Membrane ausgebildete, flexible Trennwandung 46 eingespannt. Die flexible Trennwandung 46 begrenzt in der Ventilgehäuseausnehmung 42 einen Steuerraum 48, welcher über den Absaugdurchgang 44 mit der Unterdruckversorgungsseite 38a, 38b in Verbindung steht.

Das Verschlussteil 36a, 36b weist einen im Wesentlichen koaxial zu der Ventilgehäuseausnehmung 42 angeordneten Gehäusedurchbruch 50 auf. Dadurch wird auf der dem Steuerraum 48 abgewandten Seite der flexiblen Trennwandung 46 ein Saugseitenraum 52 gebildet. Dieser ist, wie nachfolgend näher erläutert, mit der Ansaugseite 40a, 40b und somit mit dem Saugraum 20 druckverbunden. Insofern ist die flexible Trennwandung 46 einerseits von dem in dem Steuerraum 48 herrschenden Druck, andererseits von dem in dem Saugseitenraum 52 herrschenden Druck beaufschlagt.

An der flexiblen Trennwandung 46 ist ein Ventilkörper 54 angeordnet mit einem sich in Richtung von der Trennwandung 46 zu der Unterdruckversorgungsseite 38a, 38 hin erstreckenden Dichtabschnitt 56, welcher aus einem flexibel verformbaren Material ausgebildet ist. Der Dichtabschnitt 56 weist eine in Richtung zu dem Absaugdurchgang 44 hin offene, konische oder saugglockenartige Vertiefung 58 auf. Diese wird von dem Dichtabschnitt 56 dichtlippenartig umgeben. Der Ventilkörper 14 ist in der Ventilgehäuseausnehmung 42 axial verschiebbar zwischen einer Öffnungslage (die beispielhaft bei dem Ventil 30b dargestellt ist) und einer Schließlage (die bei dem Ventil 30a dargestellt ist). In der Schließlage liegt der die Vertiefung 58 umgebende dichtlippenartige Bereich des Dichtabschnitts 56 an einem Dichtsitz 60 an, der im dargestellten Beispiel von der den Absaugdurchgang 44 aufweisenden Wandung des Ventilgehäuses 32a, 32b gebildet ist. In dieser Schließlage dichtet der Dichtabschnitt 56 die Unterdruckversorgungsseite 38a, 38b gegenüber dem Steuerraum 48 ab. In der Öffnungslage (vgl. das Ventil 30b) besteht eine Strömungsverbindung von dem Unterdruckversorgungskanal 22 durch den Absaugdurchgang 44 in den Steuerraum 48.

Der Ventilkörper 54 durchdringt die flexible Trennwandung 46 und bildet auf der in den Saugseitenraum 52 ragenden Seite einen Führungsabschnitt 62. Der Führungsabschnitt 62 ist in dem Gehäusedurchbruch 50 mit Spiel geführt, so dass in dem an die flexible Trennwandung 46 angrenzenden Saugseitenraum 52 der auf der Ansaugseite 40a, 40b herrschende Druck anliegt.

Der Ventilkörper 54 ist von einem Saugseitendurchgang 64 durchsetzt, welcher in der Art einer Längsmittelbohrung kanalartig in dem Führungsabschnitt 62 verläuft. Der Saugseitendurchgang 54 verbindet den Steuerraum 48 mit dem Saugseitenraum 52 und somit mit der Ansaugseite 40a, 40b.

Im Verlauf des Saugseitendurchgangs 64 ist eine Drosselstelle 66 vorgegeben, mittels welcher ein Strömungswiderstand für die Saugströmung von dem Saugseitenraum 52 bzw. der Ansaugseite 40a, 40b durch den Saugseitendurchgang 64 in den Steuerraum 48 vorgegeben werden kann. Im dargestellten Beispiel ist die Drosselstelle 66 als Durchgangskanal in einem als Aufsteckteil für den Ventilkörper 54 ausgebildeten Führungsabschnitt 62 ausgebildet. Durch Auswechseln des Aufsteckteils kann daher der Strömungswiderstand der Drosselstelle 66 verändert werden.

Der kanalartig ausgebildete Saugseitendurchgang 64 verläuft von dem Führungsabschnitt 62 in dem Ventilkörper 54 in Richtung zur Unterdruckversorgungsseite 38a, 38b durch die flexible Trennwandung 46 hindurch und mündet in Verbindungsöffnungen 68 des Ventilkörpers 54 in den Steuerraum 48. Die Verbindungsöffnungen 68 sind dabei vorzugsweise zwischen dem Dichtabschnitt 56 und der flexiblen Trennwandung 46 angeordnet und beispielsweise als radial verlaufende Durchbrüche zu dem Saugseitendurchgang 64 hin ausgebildet.

Die im dargestellten Beispiel membranartige, flexible Trennwandung 46 ist vorzugsweise in vorgespanntem Zustand in dem Ventilgehäuse 32a, 32 b angeordnet. Dadurch ist der Ventilkörper 54 gegen eine Auslenkung aus der bei dem Ventil 30b dargestellten Öffnungslage vorgespannt.

Erfolgt ein Ansaugen bei unbelegter Ansaugseite, wie dies für das Ventil 30a für die Ansaugseite 40a dargestellt ist, so stellt sich zunächst eine Strömung von dem Saugraum 20 durch die Ansaugseite 40a, den Saugseitendurchgang 64 in den Steuerraum 48, und von diesem durch den Absaugdurchgang 44 zu dem Unterdruckversorgungskanal 22 ein. Da die Strömung jedoch durch die Drosselstelle 66 begrenzt ist, kann sich bei unbelegter Ansaugseite 40a in dem Saugraum 20 und damit in dem Saugseitenraum 52 kein nennenswerter Unterdruck aufbauen. Über den Absaugdurchgang 44 wird der Steuerraum evakuiert. Insofern bildet sich aufgrund des durch die Drosselstelle 66 vorgegebenen Strömungswiderstandes ein Unterdruck in dem Steuerraum 48 gegenüber dem Saugseitenraum 52 bzw. der Ansaugseite 40a aus. Dies führt dazu, dass die flexible Trennwandung 46 zur Verkleinerung des Volumens des Steuerraums 48 ausgelenkt wird (vgl. die Darstellung von Ventil 30a). Dabei wird der Ventilkörper 54 aus seiner Öffnungslage in Richtung seiner Schließlage bewegt. Dabei gelangt der Dichtabschnitt 56 in Anlage an den Dichtsitz 60 und überdeckt den Absaugdurchgang 44. Dies führt dazu, dass der Steuerraum 48 gegenüber der Unterdruckversorgungsseite 38a abgedichtet wird und die Unterdruckversorgung nur noch an dem von der Vertiefung 58 definierten Teilraum saugt. Der Ventilkörper 54 wird in seiner Schließlage festgesaugt. In dem Steuerraum 48 stellt sich über einen Druckausgleich durch die Drosselstelle 66 daraufhin der in dem Saugseitenraum 52 herrschende Druck auf der Ansaugseite 40a ein. Bei freiem Ansaugen durch eine unbelegte Ansaugseite 40a schaltet das Ventil 30a folglich selbsttätig in seine Schließstellung.

Ist der Saugraum 20 des Saugkörpers 18 durch ein Werkstück 16 abgedichtet (wie dies für das Ventil 30b dargestellt ist) so erfolgt keine nennenswerte Strömung durch die Drosselstelle 66 und es bildet sich daher keine ausreichende Druckdifferenz in dem Steuerraum 48 gegenüber dem Saugseitenraum 52 aus. Eine Auslenkung der flexiblen Trennwandung 46 erfolgt dann nicht und der Ventilkörper 54 verbleibt in seiner Öffnungslage, wie dies bei dem Ventil 30b dargestellt ist.

## Patentansprüche

1. Ventil (30a, 30b) für eine Unterdruckhandhabungs- oder Spannvorrichtung (10),
- mit einem Ventilgehäuse (32a, 32b), welches eine Ansaugseite (40a, 40b) und eine Unterdruckversorgungsseite (38a, 38b) zum Anschluss an eine Unterdruckversorgungseinrichtung aufweist,
- mit einer flexiblen Trennwandung (46), welche in dem Ventilgehäuse (32a, 32b) einen Steuerraum (48) abgrenzt, der mit der Unterdruckversorgungsseite (38a, 38b) über einen Absaugdurchgang (44) verbunden ist,
- mit einem an der flexiblen Trennwandung (46) angeordneten Ventilkörper (54), welcher zwischen einer Öffnungslage und einer Schließlage bewegbar ist,
wobei in Abhängigkeit eines sich im Steuerraum einstellenden Unterdrucks das Volumen des Steuerraumes unter Verformung der flexiblen Trennwandung (46) verringert wird und der Ventilkörper (54) von der Öffnungslage in die Schließlage bewegt wird, so dass bei freiem Ansaugen in unbelegtem Zustand der Ansaugseite (40a) der Ventilkörper (54) aufgrund eines sich im Steuerraum (48) einstellenden Unterdrucks in die Schließlage bewegbar ist, wobei der Ventilkörper (54) einen Saugseitendurchgang (64) zur Strömungsverbindung der Ansaugseite (40a, 40b) mit dem Steuerraum (48) aufweist, **dadurch gekennzeichnet, dass** der Ventilkörper (54) einen Dichtabschnitt (56) aufweist, welcher in Schließlage den Absaugdurchgang (44) verschließt und welcher in Öffnungslage den Absaugdurchgang (44) freigibt,
wobei der Dichtabschnitt (56) derart angeordnet ist, dass er zum Verschließen des Absaugdurchganges (44) an einem zugeordneten Dichtsitz (60) im Ventilgehäuse (32a, 32b) anliegt.

2. Ventil (30a, 30b) nach Anspruch 1, **dadurch gekennzeichnet, dass** sich der Dichtabschnitt, welcher aus einem flexibel verformbaren Material ausgebildet ist, in Richtung von der flexiblen Trennwandung (46) zu der Unterdruckversorgungsseite (38a, 38) hin erstreckt.

3. Ventil (30a, 30b) nach Anspruch 1 oder 2, **dadurch gekennzeichnet, dass** der Ventilkörper (54) die flexible Trennwandung (46) durchdringt, wobei der Dichtabschnitt (56) auf einer Seite und ein Führungsabschnitt (62) auf der anderen Seite der Trennwandung (46) liegt.

4. Ventil (30a, 30b) nach einem der vorherigen Ansprüche, **dadurch gekennzeichnet, dass** der Saugseitendurchgang (64) eine Drosselstelle (66) aufweist, welche einen Strömungswiderstand für die Saugströmung von der Ansaugseite (40a, 40b) in den Steuerraum (48) derart definiert, dass sich beim Einsaugen von Luft ein Unterdruck zwischen Ansaugseite (40a, 40b) und Steuerraum (48) ausbildet.

5. Ventil (30a, 30b) nach Anspruch 3, **dadurch gekennzeichnet, dass** der Saugseitendurchgang (64) kanalartig in dem Führungsabschnitt (62) verläuft und der Ventilkörper (54) zwischen der flexiblen Trennwandung (46) und dem Dichtabschnitt (56) Verbindungsöffnungen (68) aufweist, in welchen der Saugseitendurchgang (64) in den Steuerraum (48) mündet.

6. Ventil (30a, 30b) nach einem der vorherigen Ansprüche, **dadurch gekennzeichnet, dass** der Dichtabschnitt (56) eine konische oder saugglockenartige, von verformbaren Wandungen begrenzte, Vertiefung (58) aufweist, welche dem Absaugdurchgang (44) zugewandt ist.

7. Ventil (30a, 30b) nach einem der vorherigen Ansprüche, **dadurch gekennzeichnet, dass** die flexible Trennwandung (46) entlang eines umlaufenden Randes in dem Ventilgehäuse (32a, 32b) befestigt ist.

8. Ventil (30a, 30b) nach einem der vorherigen Ansprüche, **dadurch gekennzeichnet, dass** die flexible Trennwandung (46) derart gespannt ist, dass der Ventilkörper (54) in der Öffnungslage gegen eine Bewegung in die Schließlage vorgespannt ist.

9. Ventil (30a, 30b) nach einem der vorherigen Ansprüche, **dadurch gekennzeichnet, dass** auf der dem Steuerraum (48) abgewandten Seite der flexiblen Trennwandung (46) ein Saugseitenraum (52) gebildet ist, welcher mit der Ansaugseite (40a, 40b) druckverbunden ist, insbesondere in einer Ansaugöffnung der Ansaugseite (40a, 40b) mündet.

10. Ventil (30a, 30b) nach einem der vorherigen Ansprüche, **dadurch gekennzeichnet, dass** das Ventilgehäuse (32a, 32b) mehrteilig mit einem Basisteil (34a, 34b) und einem damit verbundenen Verschlussteil (36a, 36b) ausgebildet ist, wobei die flexible Trennwand (46) derart zwischen dem Basisteil (34a, 34b) und dem Verschlussteil (36a, 36b) eingeklemmt ist, dass der Steuerraum (48) sich in dem Basisteil (34a, 34b) erstreckt und an der Verbindung zum Verschlussteil (36a, 36b) von der flexiblen Trennwandung (46) begrenzt ist.

11. Sauggreifvorrichtung (10) mit einem Saugkörper (18), welcher einen Saugraum (20) zur Anlage an ein zu greifendes Werkstück aufweist, und mit einem Ventil (30a, 30b) nach einem der Ansprüche 1 - 10 wobei der Saugraum (20) mit der Ansaugseite (40a, 40b) des Ventils (30a, 30b) verbunden ist.

12. Sauggreifvorrichtung nach Anspruch 11, **dadurch gekennzeichnet, dass** der Saugkörper (18) derart mit der flexiblen Trennwandung (46) verbunden ist, dass bei Bewegung des Ventilkörpers (54) von der Öffnungslage in die Schließlage der Saugkörper (18) von einer vorgeschobenen Sauglage in eine zurückgezogene Passivlage bewegt wird.

## Claims

1. A valve (30a, 30b) for a vacuum handling or vacuum clamping device (10),
- comprising a valve housing (32a, 32b) which has a suction side (40a, 40b) and a vacuum supply side (38a, 38b) for connection to a vacuum supply device,
- and comprising a flexible dividing wall (46) which delimits a control space (48) in the valve housing (32a, 32b), which control space is connected to the vacuum supply side (38a, 38b) via a vacuum passage (44),
- and comprising a valve body (54) which is arranged on the flexible dividing wall (46) and can be moved between an open position and a closed position,
wherein, based on a vacuum that develops in the control space, the volume of the control space is reduced accompanied by a deformation of the flexible dividing wall (46) and the valve body (54) is moved from the open position into the closed position, so that when suction is freely applied while the suction side (40a) is unoccupied, the valve body (54) can be moved to the closed position as a result of a vacuum that develops in the control space (48), wherein the valve body (54) has a suction-side passage (64) for connecting the suction side (40a, 40b) to the control space (48) in terms of flow, **characterized in that** the valve body (54) has a sealing portion (56) which seals off the vacuum passage (44) when in the closed position and which opens up the vacuum passage (44) when in the open position,
wherein the sealing portion (56) is situated such that it rests against an assigned seat (60) in the valve housing (32a, 32b) in order to seal off the vacuum passage (44).

2. The valve (30a, 30b) according to claim 1, **characterized in that** the sealing portion (56) extends from the flexible dividing wall (46) towards the vacuum supply side (38a, 38).

3. The valve (30a, 30b) according to claim 1 or 2, **characterized in that** the valve body (54) penetrates the flexible dividing wall (46), with the sealing portion (56) being situated on one side of the dividing wall (46) and a guide portion (62) being situated on the other side of the dividing wall.

4. The valve (30a, 30b) according to any one of the preceding claims , **characterized in that** the suction-side passage (64) has a throttle point (66) that defines a flow resistance for the flow of suction from the suction side (40a, 40b) into the control space (48) such that, when air is suctioned in, a vacuum forms between suction side (40a, 40b) and control space (48).

5. The valve (30a, 30b) according to claim 3, **characterized in that** the suction-side passage (64) extends within the guide portion (62) in the form of a channel, and the valve body (54) has connecting openings (68) between the flexible dividing wall (46) and the sealing portion (56), in which openings the suction-side passage (64) opens into the control space (48).

6. The valve (30a, 30b) according to any one of the preceding claims, **characterized in that** the sealing portion (56) has a conical or suction cup-like depression (58), which is delimited by deformable walls and which faces the vacuum side passage (44).

7. The valve (30a, 30b) according to any one of the preceding claims, **characterized in that** the flexible dividing wall (46) is secured along a circumferential edge in the valve housing (32a, 32b).

8. The valve (30a, 30b) according to any one of the preceding claims, **characterized in that** the flexible dividing wall (46) is clamped in such a way that the valve body (54) is prestressed in the open position against movement into the closed position.

9. The valve (30a, 30b) according to any one of the preceding claims, **characterized in that**, on the side of the flexible dividing wall (46) that faces away from the control chamber (48), a suction side space (52) is formed, which is pressure connected to the suction side (40a, 40b), particularly leading to a suction opening on the suction side (40a, 40b).

10. The valve (30a, 30b) according to any one of the preceding claims, **characterized in that** the valve housing (32a, 32b) is embodied as a multipart housing having a base part (34a, 34b) and a closure part (36a, 36b) connected thereto, wherein the flexible dividing wall (46) is clamped between the base part (34a, 34b) and the closure part (36a, 36b) in such a way that the control space (48) extends within the base part (34a, 34b) and is delimited at the connection to the closure part (36a, 36b) by the flexible dividing wall (46).

11. A suction gripping device (10) having a suction element (18), which has a suction space (20) for placement on a workpiece to be gripped, and having a valve (30a, 30b) according to any one of claims 1-10, wherein the suction space (20) is connected to the suction side (40a, 40b) of the valve (30a, 30b).

12. The suction gripping device according to claim 11, **characterized in that** the suction element (18) is connected to the flexible dividing wall (46) in such a way that, when the valve body (54) is moved from the open position to the closed position, the suction element (18) is moved from an advanced suction position to a retracted passive position.

## Revendications

1. Soupape (30a, 30b) destinée à un dispositif de manipulation ou de serrage (10) par dépression comprenant :
- un boîtier de soupape (32a, 32b) qui comporte un côté d'aspiration (40a, 40b) et un côté d'alimentation en dépression (38a, 38b) pouvant être connecté à un dispositif d'alimentation en dépression,
- une paroi de séparation flexible (46) qui délimite dans le boîtier de soupape (32a, 32b) une chambre de commande (48) qui est reliée au côté d'alimentation en dépression (38a, 38b) par un passage d'évacuation (44),
- un corps de soupape (54) monté sur la paroi de séparation flexible (46) et pouvant être déplacé entre une position d'ouverture et une position de fermeture,
en fonction d'une dépression s'établissant dans la chambre de commande, le volume de cette chambre étant diminué par déformation de la paroi de séparation flexible (46), et le corps de soupape (54) passant de la position d'ouverture dans la position de fermeture de sorte que, en présence d'une aspiration libre à l'état inoccupé du côté d'aspiration (40a) le corps de soupape (54) puisse être déplacé dans la position de fermeture en raison d'une dépression s'établissant dans la chambre de commande (48),
le corps de soupape (54) comprenant un passage côté aspiration (64) pour permettre une liaison fluidique du côté d'aspiration (40a, 40b) avec la chambre de commande (48),
**caractérisée en ce que**
le corps de soupape (54) comprend un segment d'étanchéité (56) qui, dans la position de fermeture, ferme le passage d'évacuation (44) et dans la position d'ouverture, libère le passage d'aspiration (44),
le segment d'étanchéité (56) étant réalisé de façon à s'appliquer sur un siège d'étanchéité (60) associé situé dans le boîtier de soupape (32a, 32b) pour fermer le passage d'évacuation (44).

2. Soupape (30a, 30b) conforme à la revendication 1,
**caractérisée en ce que**
le segment d'étanchéité qui est réalisé en un matériau flexible déformable s'étend dans la direction de la paroi de séparation flexible (46) vers le côté d'alimentation en dépression (38a, 38).

3. Soupape (30a, 30b) conforme à la revendication 1 ou 2,
**caractérisée en ce que**
le corps de soupape (54) traverse la paroi de séparation flexible (46), le segment d'étanchéité (56) étant situé d'un côté de la paroi de séparation (46) et un segment de guidage (62) étant situé sur l'autre côté de cette paroi (46).

4. Soupape (30a, 30b) conforme à l'une des revendications précédentes, **caractérisée en ce que**
le passage côté aspiration (64) comporte un étranglement (66) qui définit une résistance à l'écoulement pour le flux d'aspiration du côté aspiration (40a, 40b) dans la chambre de commande (48) de sorte que, lors d'aspiration d'air il s'établisse une dépression entre le côté aspiration (40a, 40b) et la chambre de commande (48).

5. Soupape (30a, 30b) conforme à la revendication 3,
**caractérisé en ce que**
le passage côté aspiration (64) s'étend en forme de canal dans le segment de guidage (62) et le corps de soupape (54) comporte, entre la paroi de séparation flexible (46) et le segment d'étanchéité (56) des ouvertures de liaison (68) par lesquelles le passage côté aspiration (64) débouche dans la chambre de commande (48).

6. Soupape (30a, 30b) conforme à l'une des revendications précédentes, **caractérisée en ce que**
le segment d'étanchéité (56) comporte une cavité (58) conique ou en forme de ventouse d'aspiration limitée par des parois déformables, et tournée ver le passage d'évacuation (44).

7. Soupape (30a, 30b) conforme à l'une des revendications précédentes, **caractérisée en ce que**
la paroi de séparation flexible (46) est fixée dans le boîtier de soupape (32a, 32b) le long d'un bord périphérique.

8. Soupape (30a, 30b) conforme à l'une des revendications précédentes, **caractérisée en ce que**
la paroi de séparation flexible (46) est tendue de sorte que le corps de soupape (54) soit rappelé vers la position d'ouverture pour empêcher un déplacement dans la direction de fermeture.

9. Soupape (30a, 30b) conforme à l'une des revendications précédentes, **caractérisée en ce que**
sur la face de la paroi de séparation flexible (46) située à l'opposé de la chambre de commande (48) est formée une chambre côté aspiration (52) qui est reliée en pression avec le côté aspiration (40a, 40b) et en particulier débouche dans une ouverture d'aspiration du côté aspiration (40a, 40b).

10. Soupape (30a, 30b) conforme à l'une des revendications précédentes, **caractérisée en ce que**
le boîtier de soupape (32a, 32b) est réalisé en plusieurs parties avec une partie de base (34a, 34b) et une partie de fermeture (36a, 36b) reliée à celle-ci, la paroi de séparation flexible (46) étant pincée entre la partie de base (34a, 34b) et la partie de fermeture (36a, 36b) de sorte que la chambre de commande (48) s'étende dans la partie de base (34a ; 34b) et soit délimitée par la paroi de séparation flexible (46) au niveau de la liaison avec la partie de fermeture (36a, 36b).

11. Dispositif de pince aspirante (10) comprenant un corps d'aspiration (18) qui comporte une chambre d'aspiration (20) sur laquelle peut être appliquée une pièce à saisir, ainsi qu'une soupape (30a, 30b) conforme à l'une des revendications 1 à 10, la chambre d'aspiration (20) étant reliée au côté aspiration (40a, 40b) de la soupape (30a, 30b).

12. Dispositif de pince aspirante conforme à la revendication 11,
**caractérisé en ce que**
le corps d'aspiration (18) est relié à la paroi de séparation flexible (46) de sorte que, lors d'un déplacement du corps de soupape (54) de la position d'ouverture dans la position de fermeture, le corps d'aspiration (18) soit déplacé d'une position d'aspiration déployée dans une position passive repliée.
